# EUROPÄISCHE PATENTSCHRIFT

(11) **EP 1 996 890 B1**
(45) Veröffentlichungstag und Bekanntmachung des Hinweises auf die Patenterteilung: **26.07.2017**
(21) Anmeldenummer: 07722928.4
(22) Anmeldetag: 26.02.2007
(51) Int. Cl.: F28D 20/02, F28D 1/053

(54) **WÄRMEÜBERTRAGER MIT KÄLTESPEICHER**
HEAT EXCHANGER WITH COLD ACCUMULATOR
ECHANGEUR THERMIQUE AVEC ACCUMULATEUR DE FROID

(30) Priorität: 09.03.2006 DE 102006011327
(43) Veröffentlichungstag der Anmeldung: 03.12.2008
(73) Patentinhaber: MAHLE Behr GmbH & Co. KG, 70469 Stuttgart (DE)
(72) Erfinder: KERLER, Boris, 70192 Stuttgart (DE); KOHL, Michael, 74321 Bietigheim-Bissingen (DE); MANSKI, Ralf, 70197 Stuttgart (DE); STRAUSS, Thomas, 73274 Notzingen (DE); WALTER, Christoph, 70469 Stuttgart (DE)
(74) Vertreter: Grauel, Andreas
(86) Internationale Anmeldenummer: PCT/EP2007/001616
(87) Internationale Veröffentlichungsnummer: WO 2007/101572

(56) Entgegenhaltungen:
- EP-A- 1 424 531
- EP-A- 1 652 702
- EP-A- 1 657 088
- WO-A-2006/053721
- DE-A1- 10 156 944
- DE-A1- 10 247 268
- DE-A1- 10 306 048
- FR-A1- 2 878 613
- JP-A- 2000 205 777

## Beschreibung

Die Erfindung betrifft einen Wärmeübertrager, insbesondere für eine Kraftfahrzeug-Klimaanlage, mit Kältespeicher gemäß dem Oberbegriff des Anspruches 1.

Es ist ein Ziel der Kraftfahrzeughersteller, den Kraftstoffverbrauch des Fahrzeugs zu reduzieren. Eine Maßnahme zur Reduzierung des Kraftstoffverbrauchs ist das Abschalten des Motors bei vorübergehendem Stillstand, beispielsweise beim Halten an einer Ampel. Dieses vorübergehende Abschalten des Motors wird auch Idle-stop-Betrieb genannt. Diese Maßnahme wird bei heutigen verbrauchsarmen Fahrzeugen, wie beispielsweise bei dem sogenannten Dreiliter-Fahrzeug, bereits eingesetzt. Bei Fahrzeugen, die über den Idle-stop-Betriebsmodus verfügen, ist im innerstädtischen Verkehr ca. 25-30 % der Fahrzeit der Motor ausgeschaltet.

Dies ist ein Grund, warum derartige Fahrzeuge oftmals nicht mit einer Klimaanlage ausgerüstet sind, denn bei Motorstillstand kann auch ein für eine Klimaanlage notwendiger Kompressor nicht angetrieben werden, so dass im Idle-stop-Betrieb eine Klimaanlage die notwendige Kälteleistung nicht bereitstellen kann. Zum Teil wird das Problem auch dadurch gelöst, dass bei eingeschalteter Klimaanlage der Motor bei einem Stopp weiterläuft, wodurch jedoch ein höherer Kraftstoffverbrauch resultiert.

In der DE 101 56 944 A1 ist eine Klimaanlage für ein Kraftfahrzeug mit in einem Kältemittelkreis angeordnetem Kompressor und Verdampfer zum Abkühlen von zu konditionierender Luft für den Innenraum offenbart, welche einen zweiten Verdampfer zum Abkühlen der Luft aufweist, der zusätzlich ein Kältespeichermedium enthält, wobei die zu konditionierende Luft wahlweise durch jeden Verdampfer einzeln oder durch beide Verdampfer gemeinsam leitbar ist. Gemäß einer alternativen Ausführungsform ist an Stelle des zweiten Verdampfers der Verdampfer derart ausgebildet, dass er zwei Teilbereiche aufweist, und in einem der beiden Teilbereiche ein Kältespeichermedium enthält, wobei die zu konditionierende Luft wahlweise durch jeden Verdampfer einzeln oder durch beide Verdampfer gemeinsam leitbar ist. Dabei können die Rohre, in welchen das Kältemittel durch den Verdampfer strömt, als Mehrkanalrohre ausgebildet sein, wobei einer oder mehrere der Kanäle mit dem Kältespeichermedium gefüllt sind.

Ausgehend von diesem Stand der Technik ist es Aufgabe der Erfindung, einen verbesserten Wärmeübertrager zur Verfügung zu stellen. Diese Aufgabe wird gelöst durch einen Wärmeübertrager mit den Merkmalen des Anspruchs 1. Vorteilhafte Ausgestaltungen sind Gegenstand der Unteransprüche.

Erfindungsgemäß ist ein Wärmeübertrager, insbesondere ein Verdampfer für eine Kraftfahrzeug-Klimaanlage zum Abkühlen von zu konditionierender Luft für den Innenraum vorgesehen, mit einer Mehrzahl nebeneinanderliegend angeordneter, kältemittelführender Rohre, die in mindestens einem Sammelbehälter enden, und mit wenigstens einem Kältespeicher, in welchem ein Kältespeichermedium vorgesehen ist, wobei der Verdampfer zwei parallel zueinander angeordnete erste und zweite Bereiche aufweist, der erste Bereich im Wesentlichen entsprechend dem eines herkömmlichen Wärmeübertragers ohne Kältespeicher ausgebildet ist, und der Kältespeicher in dem zweiten Bereich angeordnet ist. Hierbei weisen die kältemittelführenden Rohre der ersten und zweiten Bereiche, die miteinander fluchtend angeordnet sind, eine einander entsprechende Breite auf, und der erste und der zweite Bereich weisen gemeinsame, durchgehende Wellrippen auf, welche sich in Hinblick auf die Herstellungskosten günstig auswirken. Die integrierte Ausführung eines Wärmeübertragers mit integrierten Speicherelementen ist im Vergleich zu bekannten Sekundärkreisläufen oder elektrisch betriebenen Kältemittelverdichtern sehr kostengünstig. Prinzipiell ist eine derartige Ausgestaltung des Wärmeübertragers möglich, dass auf Grund des einander im Wesentlichen entsprechenden benötigten Bauraums, ein konventioneller Wärmeübertrager einfach ersetzt werden kann, so dass keine wesentlichen Umgestaltungen um den Wärmeübertrager herum erforderlich sind. In mindestens einem Kältespeicherelement ist mindestens ein kältemittelführendes Rohr angeordnet.

Bevorzugt ist hierbei der zweite Bereich von zumindest einem Teilstrom des Kältemittelstroms durchströmbar, welcher auch zumindest einen Teil des ersten Bereichs durchströmt. Bei dieser bevorzugten Ausgestaltung unterscheidet sich die Aufteilung erster und zweiter Bereich von der Aufteilung in Bezug auf den Strömungsverlauf des Kältemittels, der durch die Sammelbehälter bzw. deren Unterteilung vorgegeben wird.

Besonders bevorzugt wird der Kältemittelstrom im Wärmeübertrager aufgeteilt, wobei ein erster Teilstrom einen ersten Teil des ersten Bereichs und anschließend einen zweiten Teil des ersten Bereichs und ein zweiter Teilstrom den zweiten Bereich und anschließend den zweiten Teil des ersten Bereichs durchströmt. Bei einer derartigen Ausgestaltung ist nur ein Expansionsorgan erforderlich. Ferner ist nur eine Einleitung für Kältemittel in den Wärmeübertrager vorzusehen. Prinzipiell kann der Wärmeübertrager auch in den einzelnen Bereichen von vollständig getrennten Kältemittelströmen durchströmt werden, d.h. es erfolgt eine getrennte Ein- und Ausleitung der unterschiedlichen Kältemittelströme. Hierbei können ggf. auch unterschiedliche Expansionsorgane für die einzelnen Kältemittelströme vorgesehen sein. Ebenfalls ist - insbesondere in Verbindung mit getrennten Expansionsorganen -eine getrennte Regelung der Kältemittelströme möglich. Aus Kostengründen ist jedoch eine Ausgestaltung bevorzugt, die mit einem Expansionsorgan und einer Ein- und Ausleitung des gesamten Kältemittelstroms auskommt. Dabei wird der Kältemittelstrom bevorzugt im Wärmeübertrager, insbesondere im ersten durchströmten Block, aufgeteilt, wobei in nachfolgenden Blöcken eine Vermischung und erneute Aufteilung in Kältemittelteilströme erfolgen kann. Die Aufteilung des Kältemittelstroms erfolgt vorzugsweise im ersten Sammelbehälter, d.h. im ersten Block, jedoch ist dies nicht zwingenderweise der Fall. In dem Sammelbehälter, in welchem die Aufteilung des Kältemittelstroms erfolgt, enden Rohre sowohl eines Teils des ersten Bereichs als auch des zweiten Bereichs.

Bevorzugt erstrecken sich die ersten und zweiten Bereiche des Verdampfers jeweils über die gesamte Breite desselben. Hierbei ist bevorzugt der zweite Bereich, in welchem der Kältespeicher vorgesehen ist, luftabströmseitig des ersten Bereichs angeordnet. Der Kältemitteleintritt liegt bevorzugt in diesem luftabströmseitig angeordneten Bereich, wobei bevorzugt eine Verteilung des Kältemittels auf Teilströme, die den zweiten Bereich und einen direkt benachbarten Teil des ersten Bereichs durchströmen, verteilt wird.

Besonders bevorzugt enden die Rohre des zweiten Bereichs und zumindest ein Teil der Rohre des auf herkömmliche Weise ausgebildeten, ersten Bereichs in jeweils einem gemeinsamen Teilbereich der Sammelbehälter oder gemeinsamen Sammelbehältern, die jeweils getrennt von dem anderen Teilbereich bzw. dem Sammelbehälter ausgebildet sind, in denen die Reihe von Rohren enden, welche beabstandet von den Rohren mit Kältespeicherelement(en) angeordnet sind. Eine derartige Anordnung ermöglicht zum Einen eine ausreichende Kühlleistung bei Normalbetrieb und zum Anderen, dass der Kältespeicher automatisch im Normalbetrieb beladen wird. Die Kältespeicherelemente können miteinander verbunden sein, insbesondere über mindestens einen Sammelbehälter. Die Rohre mit Kältespeicherelement(en) bilden einen Kältespeicherbereich.

Die Durchströmung der beiden Bereiche, also des Kältespeicherbereichs und des "normalen" Bereichs, erfolgt vorzugsweise seriell, so dass nur ein Expansionsorgan für beide Bereiche vorgesehen ist.

Bei einer Anordnung des kältemittelführenden Rohres im Kältespeicherelement kann es in das mit dem Kältespeichermedium befüllte Kältespeicherelement eingesteckt sein oder aber direkt hierin ausgebildet sein, wobei das Kältespeichermedium bevorzugt das Kältemittel von allen Seiten umgibt, wobei insbesondere eine Rohr-in-Rohr-Anordnung vorgesehen ist.

Das kältemittelführende und das Kältespeichermedium enthaltende Rohr ist im Falle einer Anordnung vollständig innerhalb des Kältespeicherelements bevorzugt als ein doppelwandiges Flachrohr ausgebildet, wobei sich das Kältemittel im zentralen Bereich und das Kältespeichermedium im äußeren Bereich befindet. Gemäß einer weiteren bevorzugten Ausführungsform weist das doppelwandige Flachrohr Stege auf, die das außen liegende mit dem innen liegenden Flachrohr verbinden. Dadurch, dass der Kältespeicher direkten Luftkontakt hat, ergibt sich eine sehr gute Dynamik beim Wärmeübergang, so dass im Bedarfsfall, d.h. im Idle-stop-Betrieb, die volle Kälteleistung sofort zur Verfügung steht.

Bevorzugt enden die kältemittelführenden Rohre des zweiten Bereichs in einem Sammelbehälter, der getrennt von und lediglich über eine oder mehrere Überströmöffnungen mit einem Sammelbehälter des ersten Bereichs ausgebildet ist.

Die kältespeichermediumführenden Rohre beziehungsweise Kanäle enden vorzugsweise in einem Kältespeichermedium-Sammelbehälter, durch den die kältemittelführenden Rohre beziehungsweise Kanäle ragen, die in einem getrennten Sammelbehälter enden. Dabei kann der Kältespeichermedium-Sammelbehälter auch einstückig mit dem Kältemittel-Sammelbehälter ausgebildet sein, wobei eine entsprechende Trennwand im Behälterinneren vorgesehen ist. Das Vorsehen eines gemeinsamen Kältespeichermedium-Sammelbehälters ermöglicht eine gemeinsame Befüllung der einzelnen Kältespeicherelemente mit dem Kältespeichermedium, so dass eine einfache und schnelle Befüllung der kältespeichermediumführenden Rohre beziehungsweise Kanäle möglich ist. Ferner kann die Montage durch die bevorzugt einstückige Ausgestaltung des Kältespeichers im Falle einer getrennten Ausbildung der kältemittelführenden Rohre und der Kältespeicherelemente vereinfacht werden. Auch kann dadurch ein Ausgleichsraum für insbesondere temperaturbedingte Volumenänderungen des Kältemittels zur Verfügung gestellt werden. Ferner ermöglicht dies eine kompakte Bauweise des zweiten Bereichs.

Der Wärmeübertrager weist vorzugsweise eine Anzahl von in unterschiedlicher Richtung vom Kältemittel durchströmbarer Blöcke auf, wobei zumindest eine Reihe quer zur Luftströmungsrichtung, d.h. in Breitenrichtung des Wärmeübertragers, benachbarter Blöcke einen Teil der Rohre des ersten Bereichs und zumindest einen Teil der Rohre des zweiten Bereichs umfasst, und zumindest eine zweite Reihe benachbarter Blöcke vorgesehen ist, welche einen weiteren Teil der Rohre des ersten Bereichs, jedoch keine Rohre des zweiten Bereichs umfasst.

Der Wärmeübertrager weist vorzugsweise zwei bis vier, insbesondere drei Blöcke, und der zweite Bereich einen bis sechs Blöcke, insbesondere zwei bis vier Blöcke, auf. Besonders bevorzugt ist eine Ausgestaltung, gemäß der die Blockreihen jeweils die gleiche Anzahl von Blöcken aufweisen und die Blöcke im Gegenstrombetrieb durchströmt werden, wobei die Blockbreiten von in Luftströmungsrichtung benachbarten Blöcken einander entsprechen. Beliebige andere Ausgestaltungsformen sind jedoch ebenfalls möglich.

Bei den Rohren, welche vom Kältemittel durchströmt werden, handelt es sich vorzugsweise um geschweißte, gefalzte, aus Scheiben tiefgezogene oder extrudierte Flachrohre, die sowohl abgerundet als auch eckig ausgebildet sein können. Jedoch können auch bspw. ovale Rohre oder Rundrohre verwendet werden. Als Materialien kommen insbesondere Aluminium und Aluminiumlegierungen in Frage, jedoch ist auch die Verwendung beliebiger anderer geeigneter, gut wärmeleitender Materialien möglich.

Der Kältespeicher besteht bevorzugt aus Aluminium, insbesondere innen und/oder außen beschichtetem Aluminium (wobei unter Aluminium auch eine Aluminiumlegierung zu verstehen ist), gegebenenfalls auch Kupfer, einer Kupfer-Zink-Legierung, Kunstharz oder Kunststoff. Ein Aluminium-Behälter hat den Vorteil, dass er sich mit den übrigen Teilen des Verdampfers problemlos verlöten lässt. Dabei handelt es sich bevorzugt um ein stranggepresstes Flachrohr, das eine Mehrzahl von Kanälen aufweist, wobei ein Teil der Kanäle das Kältespeichermedium und der andere Teil der Kanäle das Kältemittel enthalten. Die Ausgestaltung kann jedoch auch mehrteilig sein.

Beim Latent- oder Speichermedium handelt es sich bevorzugt um ein PCM-Material (phase change material), das bevorzugt kongruent schmelzende Medien, insbesondere Decanol, Tetra-, Penta- oder Hexadecan, Li-CIO₃3H₂O, wässrige Salzlösungen oder organische Hydrate enthält oder hieraus gebildet ist. Im Speichermedium können auch Keimbildner vorgesehen sein, welche die Kristallbildung beschleunigen.

Die Phasenumwandlungstemperatur des Speichermediums liegt vorzugsweise in einem Bereich von 0°C bis 30°C, bevorzugt von 1°C bis 20°C, insbesondere von 2°C bis 15°C, insbesondere bevorzugt von 4°C bis 12°C.

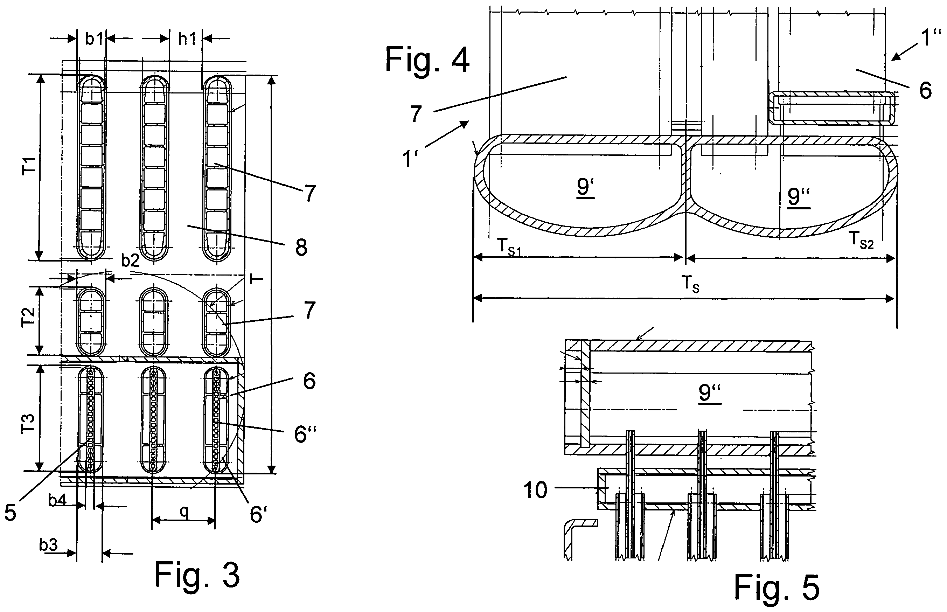

Im Inneren des Kältespeicherelements können - unabhängig ob es das kältemittelführende Rohr ganz oder nur teilweise umgibt - Einlagen, wie Rippenbleche, vorzugsweise aus Aluminium, jedoch sind auch andere Metalle oder Kunststoffe geeignet, oder andere Turbulenzeinlagen, wie Vliese oder Gestricke, bspw. aus Kunststoff oder Metall, oder Schäume, bspw. Metallschäume oder Kunststoffschäume, vorgesehen sein. Die Einlagen dienen zur Verbesserung des Wärmetransports sowie zur Erhöhung der inneren Oberfläche um die Kristallbildung des Speichermediums zu beschleunigen. Bevorzugt hat der Wärmeübertrager im Falle eines symmetrisch ausgebildeten Sammelbehälters oder einer symmetrischen Anordnung zweier Sammelbehälter folgende Abmessungen (bezüglich der Maße wird auf die Figuren 3 bis 5 verwiesen):
Die Gesamttiefe T des Wärmeübertragers beträgt bevorzugt 25 bis 200 mm, insbesondere 35 bis 80 mm, besonders bevorzugt 60 +/- 10 mm. Die Bautiefen Ts1 und Ts2 sind entsprechend halb so groß (symmetrische Ausgestaltung des Sammelbehälters).

Die Flachrohrbreite b3 der Flachrohre im Kältespeicherbereich hängt vom erforderlichen Speichermedium ab und beträgt vorzugsweise 2,0 bis 6,0 mm, insbesondere 3,0 bis 5,0 mm. Sie entspricht der Flachrohrbreite b1 und b2 der "normalen" Flachrohre.

Die Bautiefe T3 dieses Kältespeicher-Flachrohres hängt davon ab, wieviel Speichermedium benötigt wird und wieviel Gesamtbautiefe T zur Verfügung steht. Bevorzugt beträgt die Bautiefe T3 5 bis 70 mm, insbesondere 10 bis 30 mm.

Die Flachrohrbreite b4 beträgt vorzugsweise 0,6 bis 2,5 mm, insbesondere 0,9 bis 1,5 mm.

Die Bautiefe T1 der vom Kältespeicherbereich entfernten Flachrohrreihe hängt wesentlich von der Gesamtbautiefe T ab, wobei sie vorzugsweise 10 bis 100 mm, insbesondere 15 bis 40 mm beträgt. Im übrigen gilt bei der symmetrischen Ausgestaltung des bzw. der Sammelbehälter T2+T3<T1.

Die Querteilung q sämtlicher Flachrohrreihen des Verdampfers beträgt vorzugsweise 5 bis 20 mm, insbesondere bevorzugt 7 bis 13 mm. Sie entspricht bevorzugt der Querteilung der zweiten Flachrohrreihe des Verdampfers.

Die Höhe h1 der Wellrippe beträgt bevorzugt 3 bis 18 mm, insbesondere 4 bis 10 mm.

Der Verdampfer im Bereich des Kältespeichers weist Flachrohre, welche das Kältespeichermedium in den äußeren Kältespeichermedium-Kanälen enthalten, mit Breiten b3 von vorzugsweise 2,0 bis 10,0 mm, insbesondere von 3,0 bis 8,0 mm, auf. Die Breite b4 der hierin angeordneten Flachrohre, in deren Kältemittel-Kanälen das Kältemittel strömt, beträgt vorzugsweise 0,6 bis 2,5 mm, insbesondere 0,9 bis 1,5 mm.

Die Bautiefe T3 der Flachrohre des Verdampfers im Bereich mit Kältespeicher beträgt vorzugsweise 5 bis 70 mm, insbesondere bevorzugt 10 bis 30 mm.

Die Höhe der Kältespeichermedium-Sammelbehälter beträgt bevorzugt 3 bis 25 mm, insbesondere 3 bis 15 mm, ist jedoch vorzugsweise so klein wie möglich, um Bauraum zu sparen und den von Luft durchströmbaren Querschnitt so groß wie möglich zu halten.

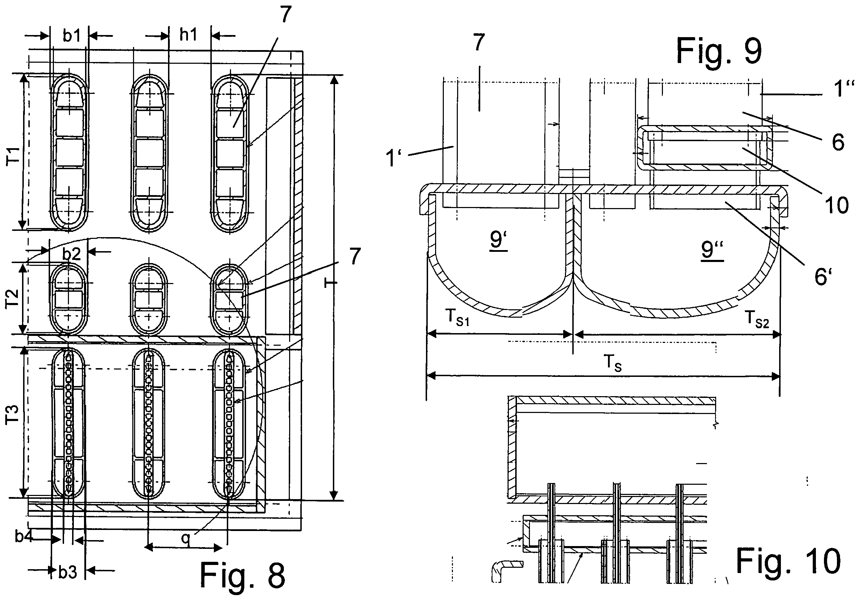

Bevorzugt hat der Wärmeübertrager im Falle eines asymmetrisch ausgebildeten Sammelbehälters oder einer asymmetrischen Anordnung zweier Sammelbehälter folgende Abmessungen (bezüglich der Maße wird auf die Figuren 8 bis 10 verwiesen):
Die Gesamttiefe T des Wärmeübertragers beträgt bevorzugt 25 bis 200 mm, insbesondere 35 bis 80 mm, besonders bevorzugt 60 +/- 10 mm. Die Bautiefe Ts1 beträgt vorzugsweise 10 bis 80 mm, insbesondere 15 bis 40 mm, die Bautiefe Ts2 beträgt vorzugsweise 15 bis 120 mm, insbesondere 20 bis 60 mm.

Die Flachrohrbreite b3 der Flachrohre im Kältespeicherbereich hängt vom erforderlichen Speichermedium ab und beträgt vorzugsweise 2,0 bis 6,0 mm, insbesondere 3,0 bis 5,0 mm. Sie entspricht der Flachrohrbreite b1 und b2 der "normalen" Flachrohre.

Die Bautiefe dieses Kältespeicher-Flachrohres hängt davon ab, wieviel Speichermedium benötigt wird und wieviel Gesamtbautiefe T zur Verfügung steht. Bevorzugt beträgt T3 5 bis 70 mm, insbesondere 10 bis 30 mm.

Die Flachrohrbreite b4 beträgt vorzugsweise 0,6 bis 2,5 mm, insbesondere 0,9 bis 1,5 mm.

Die Bautiefe T1 der vom Kältespeicherbereich entfernten Flachrohrreihe hängt wesentlich von der Gesamtbautiefe T ab, wobei sie vorzugsweise 10 bis 80 mm, insbesondere 15 bis 40 mm beträgt. Im Übrigen gilt bei der asymmetrischen Ausgestaltung des bzw. der Sammelbehälter T2+T3>T1.

Die Querteilung q sämtlicher Flachrohrreihen des Verdampfers beträgt vorzugsweise 5 bis 20 mm, insbesondere bevorzugt 7 bis 13 mm. Sie entspricht bevorzugt der Querteilung der zweiten Flachrohrreihe des Verdampfers.

Die Höhe h1 der Wellrippe beträgt bevorzugt 3 bis 18 mm, insbesondere 4 bis 10 mm.

Der Verdampfer im Bereich des Kältespeichers weist Flachrohre, welche das Kältespeichermedium in den äußeren Kältespeichermedium-Kanälen enthalten, mit Breiten b3 von vorzugsweise 2,0 bis 10,0 mm, insbesondere von 3,0 bis 8,0 mm, auf. Die Breite b4 der hierin angeordneten Flachrohre, in deren Kältemittel-Kanälen das Kältemittel strömt, beträgt vorzugsweise 0,6 bis 2,5 mm, insbesondere 0,9 bis 1,5 mm.

Die Bautiefe T3 der Flachrohre des Verdampfers im Bereich mit Kältespeicher beträgt vorzugsweise 5 bis 70 mm, insbesondere bevorzugt 10 bis 30 mm.

Die Höhe der Kältespeichermedium-Sammelbehälter beträgt bevorzugt 3 bis 25 mm, insbesondere 3 bis 15 mm, ist jedoch vorzugsweise so klein wie möglich, um Bauraum zu sparen und den von Luft durchströmbaren Querschnitt so groß wie möglich zu halten.

Im Folgenden wird die Erfindung anhand eines Ausführungsbeispiels mit Varianten, teilweise unter Bezugnahme auf die Zeichnung, im Einzelnen erläutert. Es zeigen:
- Fig. 1: eine perspektivische Ansicht eines Wärmeübertragers gemäß dem ersten Ausführungsbeispiel,
- Fig. 2: eine Seitenansicht des Wärmeübertragers von Fig. 1,
- Fig. 3: eine ausschnittsweise Schnittdarstellung quer durch die Flachrohre des Wärmeübertragers von Fig. 1,
- Fig. 4: eine ausschnittsweise Schnittdarstellung quer durch den unteren Sammelbehälter des Wärmeübertragers von Fig. 1,
- Fig. 5: eine ausschnittsweise Schnittdarstellung längs durch den oberen Sammelbehälter und die Enden der Flachrohre im Kältespeicherbereich des Wärmeübertragers von Fig. 1,
- Fig. 6: eine perspektivische Ansicht einer Variante des Wärmeübertragers von Fig. 1,
- Fig. 7: eine Seitenansicht des Wärmeübertragers von Fig. 6,
- Fig. 8: eine ausschnittsweise Schnittdarstellung quer durch die Flachrohre des Wärmeübertragers von Fig. 6,
- Fig. 9: eine ausschnittsweise Schnittdarstellung quer durch den unteren Sammelbehälter des Wärmeübertragers von Fig. 6, und
- Fig. 10: eine ausschnittsweise Schnittdarstellung längs durch den oberen Sammelbehälter und die Enden der Flachrohre im Kältespeicherbereich des Wärmeübertragers von Fig. 6.

Eine Kraftfahrzeug-Klimaanlage zum Temperieren des Kraftfahrzeug-Innenraums mit einem Kältemittel-Kreislauf (vorliegend R134a, jedoch kann bspw. auch CO₂ oder ein anderes Kältemittel verwendet werden) von der nur der Verdampfer 1 dargestellt ist, weist, um auch bei einem Motorstopp zumindest über einen kurzen Zeitraum eine ausreichende Kühlleistung zur Verfügung zu stellen, einen integriert in den Verdampfer 1 ausgebildeten Kältespeicher 4 auf, bestehend aus einer Mehrzahl von Kältespeicherelementen 5, welche mit einem Kältespeichermedium gefüllt sind, und die während des normalen Betriebs vom den Verdampfer 1 durchströmenden Kältemittel gekühlt werden. Die Kältespeicherelemente 5 sind durch Bereiche speziell ausgestalteter Flachrohre 6 aus Aluminium gebildet, auf die an späterer Stelle näher eingegangen wird. Als Kältespeichermedium dient vorliegend Decanol. Alternativ sind beispielsweise auch Tetra-, Penta- oder Hexadecan geeignet.

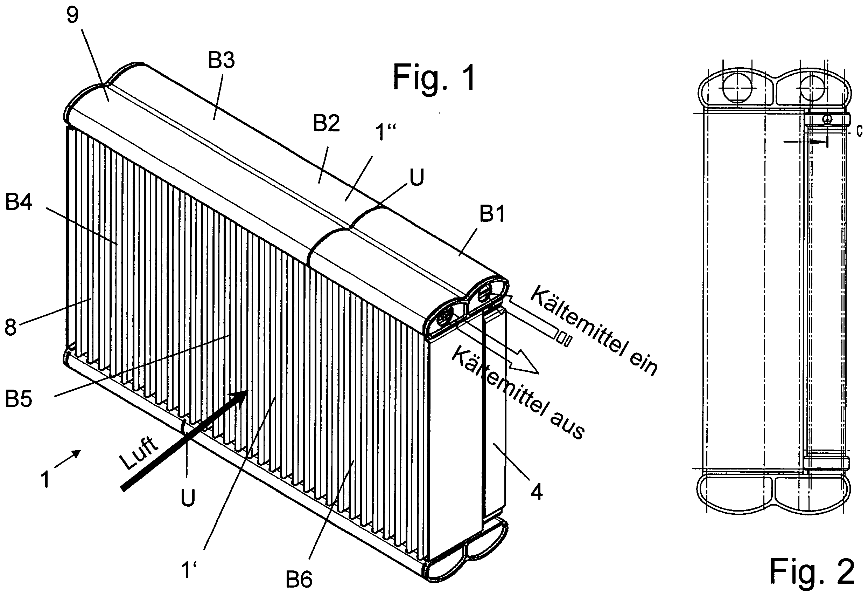

Die normale Luftströmungsrichtung ist in der Figur 1 durch einen Pfeil angedeutet, wie auch das Ein- und Ausströmen des Kältemittels. Wie aus Figuren 1 und 2 ersichtlich, tritt das Kältemittel an der Schmalseite des oberen Sammelbehälters 9 luftabströmseitig in den Verdampfer 1 ein (Bereich 9") und verlässt ihn auf der gleichen Schmalseite im luftanströmseitigen Bereich des Sammelbehälters 9 (Bereich 9').

Der Verdampfer 1 weist im größeren, luftanströmseitigen Teil einen Bereich 1' mit zwei Reihen von Flachrohren 7, vorliegend mit unterschiedlichem Querschnitt, und dazwischen angeordnete Wellrippen 8 auf. Die Flachrohre 7 enden jeweils in einem einstückigen, in Hinblick auf seinen Querschnitt symmetrisch ausgebildeten Sammelbehälter 9 in unterschiedlichen - durch eine in Breitenrichtung des Verdampfers 1 verlaufende Trennwand getrennte - Sammel- und Verteilerbereiche.

Der andere Bereich des Verdampfers 1, nämlich der Kältespeicherbereich 1", welchem die Kältespeicherelemente 5 vorgesehen sind, wird durch den kleineren, luftabströmseitigen Teil des Verdampfers 1 gebildet. Im Kältespeicherbereich 1" sind eine Reihe von Kältespeicher-Flachrohren 6 und ebenfalls Wellrippen 8 angeordnet. Die Kältespeicher-Flachrohre 6 enden in dem gleichen Sammel- und Verteilerbereich wie die direkt benachbarte Reihe von Flachrohren 7, wobei diese Reihe von Flachrohren 7 schmaler ausgebildet ist als die luftanströmseitig angeordnete, von den Kältespeicher-Flachrohren 6 beabstandete Flachrohrreihe.

Die Kältespeicher-Flachrohre 6 im Kältespeicherbereich 1" und die herkömmlichen Flachrohre 7 im Bereich 1' sind, wie insbesondere aus Fig. 3 ersichtlich, derart angeordnet, dass bei allen drei Flachrohrreihen je ein Flachrohr mit den beiden anderen Flachrohren der anderen Reihen in Luftströmungsrichtung fluchtet. Hierbei sind die Flachrohren 6 und 7 derart ausgebildet, dass sie in ihren Breiten b1, b2 und b3 einander entsprechen. Dies ist in Hinblick auf den Strömungswiderstand für die den Verdampfer 1 durchströmende Luft optimal. Ferner ermöglicht diese Ausgestaltung, dass die Wellrippen 8 durchgehend ausgebildet sein können, d.h. eine Wellrippe erstreckt sich über beide Verdampferbereiche 1' und 1".

Die Bautiefe T1 der luftanströmseitigen Flachrohrreihe ist größer als die Bautiefe T2 der benachbarten Flachrohrreihe und auch größer als die Bautiefe T3 der luftabströmseitig angeordneten Kältespeicher-Flachrohrreihe, wobei T1 größer als T2 zuzüglich T3 ist, so dass die besagte symmetrische Ausgestaltung der Sammelbehälter 9 möglich ist.

Die Kältespeicher-Flachrohre 6 weisen einen im Wesentlichen doppelwandigen Aufbau mit einer Mehrzahl von Kältemittel-Kanälen 6' und Kältespeichermedium-Kanälen 6" auf, wobei die Kältemittel-Kanäle 6' innen angeordnet sind (siehe Fig. 3). Dabei sind die Kältespeicher-Flachrohre 6 derart angeordnet, dass die als Kältespeicherelemente 5 dienenden Kältespeichermedium-Kanäle 6" jeweils in einem von zwei Kältespeichermedium-Sammelbehältern 10 enden, so dass das Kältespeicherelement 5 nur einen einzigen Hohlraum aufweist, welcher - von einem Ausgleichsraum abgesehen - vollständig mit dem Kältespeichermedium gefüllt ist. Das Befüllen erfolgt über eine Öffnung im Kältespeichermedium-Sammelbehälter 10 in einem einzigen Arbeitsgang. Nach dem Befüllen wird die Öffnung fest verschlossen, so dass ein unbefugtes Öffnen sicher verhindert wird.

Im Inneren des durchgehenden Hohlraums der Kältespeicherelemente sind gemäß einer nicht in der Zeichnung dargestellten Variante Elemente vorgesehen, wie vorliegend ein Kunststoff-Vlies, die zur Verbesserung des Wärmetransports sowie zur Erhöhung der inneren Oberfläche dienen, um die Kristallbildung des Latentmediums zu beschleunigen.

Die Kältemittel-Kanäle 6' ragen mit ihren Enden jeweils durch die entsprechenden Kältespeichermedium-Sammelbehälter 10 hindurch und enden jeweils im Sammelbehälter 9.

Der Verdampfer 1 wird in seinem Bereich 1' derart durchströmt, dass der Kältemittelstrom in der Verdampferbreite zweimal umgelenkt wird (vgl. Umlenkstellen U in Fig. 1, in denen in den Sammelbehältern 9 jeweils Trennwände vorgesehen sind), bevor er in einem der Sammelbehälter 9 von einem Teilbereich (in Fig. 2 rechts) desselben in einen anderen Teilbereich (in Fig. 3 links) desselben in die Tiefe entgegen der Luftströmungsrichtung umgelenkt wird. Im luftanströmseitigen Bereich des Verdampfers 1, vorliegend jeweils in Verlängerung der Umlenkstellen U des luftabströmseitigen Teilbereichs, wird er ebenfalls zweimal in der Breite umgelenkt. Es handelt sich somit um einen Verdampfer mit sechs Blöcken B1 bis B6, wobei je drei Blöcke in Breitenrichtung des Verdampfers 1 vorgesehen sind (d.h. in der zuerst durchströmten Reihe die Blöcke B1 bis B3 und in der zuletzt durchströmten Reihe die Blöcke B4 bis B6) und die einzelnen Blöcke B1 bis B6 der beiden Blockreihen im Kreuz-Gegenstrombetrieb durchströmt werden, wobei die Blöcke B1, B3 und B5 vorliegend von oben nach unten und die Blöcke B2, B4 und B6 von unten nach oben durchströmt werden.

Wie aus Fig. 4 ersichtlich, wird der Kältemittelstrom im luftabströmseitigen Teilbereich des Sammelbehälters 9 (Bereich 9") auf die Flachrohre 6 des Kältespeicherbereichs 1" und die benachbart hierzu angeordneten Flachrohrreihe der Flachrohre 7 verteilt, die parallel durchströmt werden, d.h. der Kältespeicherbereich 1" ist - gemeinsam mit der benachbarten Flachrohrreihe - Teil der Blöcke B1 bis B3.

In Folge des zuvor beschriebenen Aufbaus des Verdampfers 1 ist nur ein Expansionsorgan erforderlich. Die Regelung des Kältemittel-Kreislaufs erfolgt auf an sich bekannte Weise und wird durch das Vorsehen der Kältespeicherelemente, die während des normalen Betriebs der Klimaanlage automatisch durch das Kältemittel beladen werden, nicht erschwert.

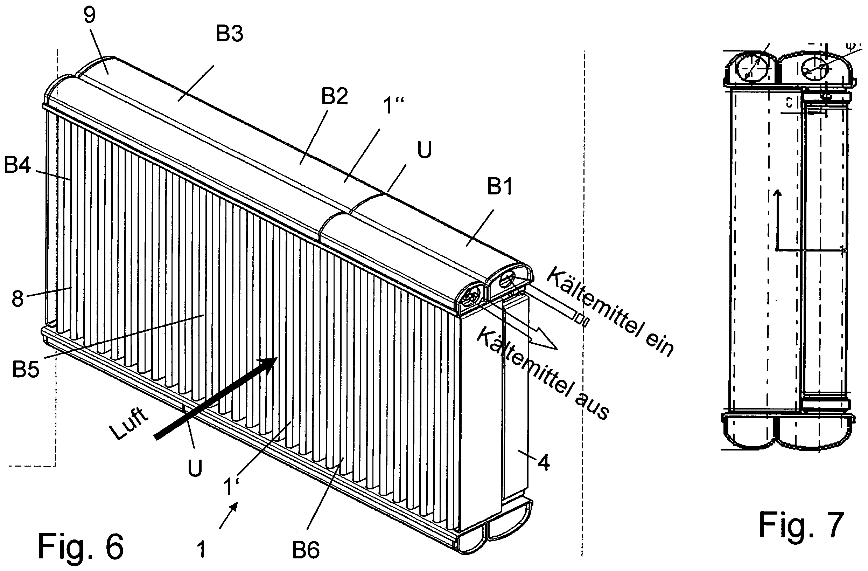

Die in den Figuren 6 bis 10 dargestellte Variante des ersten Ausführungsbeispiels unterscheidet sich vom ersten Ausführungsbeispiel insbesondere dadurch, dass als Sammelbehälter 9 jeweils zwei obere und untere Sammelbehälter 9', 9" an Stelle der entsprechenden, einteilig ausgebildeten Sammelbehälter 9 (Bereiche 9', 9") vorgesehen sind, die zudem nicht spiegelbildlich ausgebildet sind. Hierbei ist die Bautiefe TS2 des Sammelbehälters 9", in den sowohl die Kältespeicher-Flachrohrreihe als auch die benachbarte Flachrohrreihe einmündet, größer als die Bautiefe TS1 des anderen Sammelbehälters 9' (siehe Fig. 9). Abgesehen von der unterschiedlichen Ausgestaltung in Hinblick auf die Bautiefen TS1 und TS2, mit denen auch andere Bautiefen der Flachrohrreihen zusammenhängen, und der unterschiedlichen Ausgestaltung der Sammelbehälter 9 stimmt die Variante mit dem ersten Ausführungsbeispiel überein, so dass in der Zeichnung gleiche und gleichwirkende Bauteile mit den gleichen Bezugszeichen wie beim zuvor beschriebenen ersten Ausführungsbeispiel versehen sind.

Die asymmetrische Ausgestaltungsform, wie sie in der Variante des ersten Ausführungsbeispiels vorgesehen ist, - sei es mit jeweils einem oder zwei getrennt ausgebildeten Sammelbehältern - ermöglicht einen besseren Ausgleich der erforderlichen Strömungsfläche für das Kältemittel, d.h. im asymmetrischen Fall kann mehr Kältespeichermedium vorgesehen werden, also auch mehr Kälte gespeichert werden.

An Stelle des zuvor beschriebenen Aufbaus können die Sammelbehälter auch auf andere Weise, insbesondere in Plattenbauweise, aufgebaut sein.

Alle Varianten sind unabhängig vom Kältemittel (R134a, R744), der Sammlerkonstruktion (gebogener Sammler, Plattenbauweise) und Blockverschaltung des Serienverdampfers (bspw. 2-, 3- oder 4-Blockverschaltung).

## Patentansprüche

1. Wärmeübertrager, insbesondere Verdampfer (1), mit einer Mehrzahl nebeneinanderliegend angeordneter, kältemittelführender Rohre, die in mindestens einem Sammelbehälter (9) enden, und mit wenigstens einem Kältespeicher (4), bestehend aus einer Mehrzahl von Kältespeicherelementen (5), welchem ein Kältespeichermedium vorgesehen ist, wobei der Wärmeübertrager (1) zwei parallel zueinander angeordnete erste und zweite Bereiche (1' und 1") aufweist und der Kältespeicher (4) in dem zweiten Bereich (1 ") angeordnet ist, wobei die kältemittelführenden Rohre (6, 7) der ersten und zweiten Bereiche (1', 1") miteinander fluchtend angeordnet sind und eine einander entsprechende Breite (b1, b2, b3) aufweisen, und der erste und der zweite Bereich (1' und 1") gemeinsame, durchgehende Wellrippen (8) aufweisen, **dadurch gekennzeichnet, dass** in mindestens einem Kältespeicherelement (5) mindestens ein kältemittelführendes Rohr angeordnet ist.

2. Wärmeübertrager nach Anspruch 1, **dadurch gekennzeichnet, dass** der zweite Bereich (1") von zumindest einem Teilstrom des Kältemittelstroms durchströmbar ist, welcher auch zumindest einen Teil des ersten Bereichs (1') durchströmt.

3. Wärmeübertrager nach Anspruch 1 oder 2, **dadurch gekennzeichnet, dass** die ersten und zweiten Bereiche (1' und 1") des Verdampfers (1) sich jeweils über die gesamte Breite desselben erstrecken.

4. Wärmeübertrager nach einem der vorhergehenden Ansprüche, **dadurch gekennzeichnet, dass** der zweite Bereich (1") luftabströmseitig des ersten Bereichs (1') angeordnet ist.

5. Wärmeübertrager nach einem der vorhergehenden Ansprüche, **dadurch gekennzeichnet, dass** Rohre (6) des zweiten Bereichs (1") und zumindest ein Teil der Rohre (7) des ersten Bereichs (1') in jeweils einem gemeinsamen Teilbereich der Sammelbehälter (9) oder gemeinsamen Sammelbehältern (9") enden, die jeweils getrennt von dem anderen Teilbereich bzw. dem Sammelbehälter (9') ausgebildet sind, in denen die Reihe von Rohren (7) enden, welche beabstandet von den Rohren (6) mit Kältespeicherelement(en) (5) angeordnet sind.

6. Wärmeübertrager nach einem der vorhergehenden Ansprüche, **dadurch gekennzeichnet, dass** das kältemittelführende und das Kältespeichermedium enthaltende Rohr ein doppelwandiges Flachrohr (6) ist, wobei sich das Kältemittel im zentralen Bereich und das Kältespeichermedium im äußeren Bereich befindet.

7. Wärmeübertrager nach einem der vorhergehenden Ansprüche, **dadurch gekennzeichnet, dass** genau eine Reihe von Rohren (6) mit Kältespeicherelementen (5) und mindestens zwei Reihen von Rohren (7) ohne Kältespeicherelementen vorgesehen sind.

8. Wärmeübertrager nach einem der vorhergehenden Ansprüche, **dadurch gekennzeichnet, dass** die Reihe von Rohren (6) mit Kältespeicherelementen (5) im gleichen Sammelbehälter (9') oder im gleichen Teilbereich des Sammelbehälters (9) enden, wie die benachbarten Rohre der nächsten Reihe von Rohren (7) ohne Kältespeicherelementen.

9. Wärmeübertrager nach einem der vorhergehenden Ansprüche, **dadurch gekennzeichnet, dass** die kältespeichermediumführenden Rohre beziehungsweise Kanäle in einem Kältespeichermedium-Sammelbehälter (10) enden, durch den die kältemittelführenden Rohre beziehungsweise Kanäle ragen, die in einem getrennten Sammelbehälter (12) enden.

10. Wärmeübertrager nach einem der vorhergehenden Ansprüche, **dadurch gekennzeichnet, dass** der Wärmeübertrager eine Anzahl von in unterschiedlicher Richtung vom Kältemittel durchströmbarer Blöcke (B1 bis B6) aufweist, wobei zumindest eine Reihe benachbarter Blöcke (B1 bis B3) einen Teil der Rohre des ersten Bereichs (1') und zumindest einen Teil der Rohre des zweiten Bereichs (1") umfasst, und zumindest eine zweite Reihe benachbarter Blöcke (B4 bis B6) vorgesehen ist, welche einen weiteren Teil der Rohre des ersten Bereichs (1') umfasst.

11. Wärmeübertrager nach Anspruch 10, **dadurch gekennzeichnet, dass** die erste Reihe von Blöcken (B1 bis B3) direkt benachbart zur zweiten Reihe von Blöcken (B4 bis B6) zwei bis vier, insbesondere drei Blöcke (B1 bis B3), und die zweite Reihe von Blöcken (B4 bis B6) einen bis sechs Blöcke, insbesondere zwei bis vier Blöcke (B4 bis B6), aufweist.

12. Wärmeübertrager nach einem der vorhergehenden Ansprüchen, **dadurch gekennzeichnet, dass** die Phasenumwandlungstemperatur des Kältespeichermediums in einem Bereich von 0°C bis 30°C, vorzugsweise 1°C bis 20°C, insbesondere von 2°C bis 15°C, insbesondere bevorzugt von 4°C bis 12°C, liegt.

13. Wärmeübertrager nach einem der vorhergehenden Ansprüche, **dadurch gekennzeichnet, dass** im Kältespeicher (4) mindestens eine Einlage angeordnet ist

14. Klimaanlage mit Kältespeicher (4), insbesondere für ein Kraftfahrzeug, mit einem Kältemittelkreislauf, **gekennzeichnet durch** einen Verdampfer (1) gemäß einem der Ansprüche 1 bis 13.

## Claims

1. A heat exchanger, in particular an evaporator (1), having a plurality of refrigerant-carrying pipes which are arranged one next to the other and which end in at least one collecting vessel (9), and having at least one cold accumulator (4), consisting of a plurality of cold accumulator elements (5), in which a cold accumulating medium is provided, wherein the heat exchanger (1) has two first and second regions (1' and 1") which are arranged parallel to one another, and the cold accumulator (4) is arranged in the second region (1"), wherein the refrigerant-carrying pipes (6, 7) of the first and second regions (1', 1") are arranged in line with one another and have a corresponding width (b1, b2, b3), and the first and second region (1' and 1") have common, continuous corrugated fins (8), **characterised in that** at least one refrigerant-carrying pipe is arranged in at least one cold accumulator element (5).

2. The heat exchanger according to claim 1, **characterised in that** at least a partial stream of the refrigerant stream can flow through the second region (1") and said refrigerant stream also flows through at least part of the first region (1').

3. The heat exchanger according to claim 1 or 2, **characterised in that** the first and second regions (1' and 1") of the evaporator (1) each extend over the entire width thereof.

4. The heat exchanger according to one of the preceding claims, **characterised in that** the second region (1") is arranged on the air outflow side of the first region (1').

5. The heat exchanger according to one of the preceding claims, **characterised in that** pipes (6) of the second region (1") and at least some of the pipes (7) of the first region (1') end in, in each case, a common partial region of the collecting vessels (9) or common collecting vessels (9") which are each embodied separately from the other partial region or the collecting vessel (9') in which the row of pipes (7) end, said pipes being arranged spaced apart from the pipes (6) with (a) cold accumulator element (s) (5).

6. The heat exchanger according to one of the preceding claims, **characterised in that** the refrigerant-carrying pipe and the cold accumulating medium-containing pipe is a double-walled flat pipe (6), wherein the refrigerant is located in the central region, and the cold accumulating medium is located in the outer region.

7. The heat exchanger according to one of the preceding claims, **characterised in that** precisely one row of pipes (6) is provided with cold accumulating elements (5) and at least two rows of pipes (7) are without cold accumulating elements.

8. The heat exchanger according to one of the preceding claims, **characterised in that** the row of pipes (6) with cold accumulating elements (5) end in the same collecting vessel (9') or in the same partial region of the collecting vessel (9) as the adjacent pipes of the next row of pipes (7) without cold accumulating elements.

9. The heat exchanger according to one of the preceding claims, **characterised in that** the cold accumulating medium-carrying pipes or ducts end in a cold accumulating medium collecting vessel (10) through which the refrigerant-carrying pipes or ducts, which end in a separate collecting vessel (12), project.

10. The heat exchanger according to one of the preceding claims, **characterised in that** the heat exchanger has a number of blocks (B1 to B6) through which refrigerant can flow in different directions, wherein at least one row of adjacent blocks (B1 to B3) comprises some of the pipes of the first region (1') and at least some of the pipes of the second region (1"), and at least a second row of adjacent blocks (B4 to B6) which comprises some of the other pipes of the first region (1') is provided.

11. The heat exchanger according to claim 10, **characterised in that** the first row of blocks (B1 to B3) has, directly adjacent to the second row of blocks (B4 to B6), two to four, in particular three, blocks (B1 to B3), and the second row of blocks (B4 to B6) has one to six blocks, in particular two to four blocks (B4 to B6).

12. The heat exchanger according to one of the preceding claims, **characterised in that** the phase conversion temperature of the cold accumulating medium is in a range from 0°C to 30°C, preferably 1°C to 20°C, in particular from 2°C to 15°C, in particular preferably from 4°C to 12°C.

13. The heat exchanger according to one of the preceding claims, **characterised in that** at least one insert is arranged in the cold accumulator (4).

14. An air conditioning system having a cold accumulator (4), in particular for a motor vehicle, having a refrigerant circuit, **characterised by** an evaporator (1) according to one of claims 1 to 13.

## Revendications

1. Echangeur de chaleur, en particulier évaporateur (1), comprenant une pluralité de tubes disposés les uns à côté des autres et guidant un fluide frigorigène, tubes qui se terminent dans au moins un réservoir collecteur (9), et comprenant au moins un accumulateur de froid (4) qui se compose d'une pluralité d'éléments d'accumulateur de froid (5) et auquel il est prévu de fournir un milieu d'accumulateur de froid, où l'échangeur de chaleur (1) présente deux zones, à savoir une première et une seconde zone (1' et 1") disposées en étant parallèles l'une à l'autre, et l'accumulateur de froid (4) est disposé dans la seconde zone (1"), où les tubes (6, 7) de la première et de la seconde zone (1', 1"), qui guident le fluide frigorigène, sont disposés en étant alignés l'un par rapport à l'autre et présentent une largeur (b1, b2, b3) qui se correspond l'une l'autre, et la première et la seconde zone (1' et 1") présentent des ailettes ondulées (8) continues communes, **caractérisé en ce qu'**au moins un tube guidant le fluide frigorigène est disposé dans au moins un élément (5) de l'accumulateur de froid.

2. Echangeur de chaleur selon la revendication 1, **caractérisé en ce que** la seconde zone (1") peut être traversée par au moins un flux partiel du flux de fluide frigorigène qui traverse également au moins une partie de la première zone (1').

3. Echangeur de chaleur selon la revendication 1 ou 2, **caractérisé en ce que** les première et seconde zones (1' et 1") de l'évaporateur (1) s'étendent respectivement sur la totalité de la largeur de ce même évaporateur.

4. Echangeur de chaleur selon l'une quelconque des revendications précédentes, **caractérisé en ce que** la seconde zone (1") est disposée côté évacuation d'air de la première zone (1').

5. Echangeur de chaleur selon l'une quelconque des revendications précédentes, **caractérisé en ce que** des tubes (6) de la seconde zone (1") et au moins une partie des tubes (7) de la première zone (1') se terminent respectivement dans une zone partielle commune des réservoirs collecteurs (9) ou dans des réservoirs collecteurs communs (9") qui sont configurés en étant à chaque fois séparés de l'autre zone partielle ou du réservoir collecteur (9') dans laquelle et dans lequel se termine la rangée des tubes (7) qui sont disposés en étant espacés des tubes (6) ayant un ou des élément(s) d'accumulateur de froid (5).

6. Echangeur de chaleur selon l'une quelconque des revendications précédentes, **caractérisé en ce que** le tube guidant le fluide frigorigène et contenant le milieu de l'accumulateur de froid est un tube plat (6) à double paroi, où le fluide frigorigène se trouve dans la zone centrale, le milieu de l'accumulateur de froid se trouvant dans la zone extérieure.

7. Echangeur de chaleur selon l'une quelconque des revendications précédentes, **caractérisé en ce qu'**il est prévu précisément une rangée de tubes (6) ayant des éléments d'accumulateur de froid (5), et il est prévu au moins deux rangées de tubes (7) sans élément d'accumulateur de froid.

8. Echangeur de chaleur selon l'une quelconque des revendications précédentes, **caractérisé en ce que** la rangée de tubes (6) ayant des éléments d'accumulateur de froid (5) se termine dans le même réservoir collecteur (9') ou dans la même zone partielle du réservoir collecteur (9) que les tubes adjacents de la rangée suivante de tubes (7) sans élément d'accumulateur de froid.

9. Echangeur de chaleur selon l'une quelconque des revendications précédentes, **caractérisé en ce que** les tubes ou conduits guidant le milieu de l'accumulateur de froid se terminent dans un réservoir collecteur (10) du milieu de l'accumulateur de froid, réservoir collecteur à travers lequel font saillie les tubes ou conduits guidant le fluide frigorigène, tubes ou conduits qui se terminent dans un réservoir collecteur séparé (12).

10. Echangeur de chaleur selon l'une quelconque des revendications précédentes, **caractérisé en ce que** l'échangeur de chaleur présente un certain nombre de blocs (B1 à B6) pouvant être traversés par le fluide frigorigène suivant une direction différente, où au moins une rangée de blocs adjacents (B1 à B3) comprend une partie des tubes de la première zone (1') et au moins une partie des tubes de la seconde zone (1"), et il est prévu au moins une deuxième rangée de blocs adjacents (B4 à B6), laquelle deuxième rangée comprend une autre partie des tubes de la première zone (1').

11. Echangeur de chaleur selon la revendication 10, **caractérisé en ce que** la première rangée de blocs (B1 à B3) présente, de manière directement adjacente à la deuxième rangée de blocs (B4 à B6), deux à quatre, en particulier trois blocs (B1 à B3), et la deuxième rangée de blocs (B4 à B6) présente un à six blocs, en particulier deux à quatre blocs (B4 à B6).

12. Echangeur de chaleur selon l'une quelconque des revendications précédentes, **caractérisé en ce que** la température de changement de phase du milieu de l'accumulateur de froid se situe dans une plage comprise entre 0°C et 30°C, de préférence comprise entre 1°C et 20°C, en particulier comprise entre 2°C et 15°C, en particulier de préférence comprise entre 4°C et 12°C.

13. Echangeur de chaleur selon l'une quelconque des revendications précédentes, **caractérisé en ce qu'**au moins une pièce rapportée est disposée dans l'accumulateur de froid (4).

14. Système de climatisation comprenant un accumulateur de froid (4), en particulier pour un véhicule automobile, ledit système de climatisation comprenant un circuit de fluide frigorigène et étant **caractérisé par** un évaporateur (1) selon l'une quelconque des revendications 1 à 13.
